# FASCICULE DE BREVET EUROPEEN

(11) **EP 3 087 447 B1**
(45) Date de publication et mention de la délivrance du brevet: **25.12.2019**
(21) Numéro de dépôt: 14833516.9
(22) Date de dépôt: 22.12.2014
(51) Int. Cl.: G05D 23/19, G05D 1/02, G05B 13/04, G05B 15/00

(54) **PROCÉDÉ DE PRÉVISION D'UN PARAMÈTRE DE CONFORT INTÉRIEUR ET TERMINAL ASSOCIÉ**
VERFAHREN ZUR PROGNOSE EINES INNEREN KOMFORTPARAMETERS UND ZUGEHÖRIGES ENDGERÄT
METHOD FOR FORECASTING AN INTERIOR COMFORT PARAMETER AND ASSOCIATED TERMINAL

(30) Priorité: 24.12.2013 FR 1363524
(43) Date de publication de la demande: 02.11.2016
(73) Titulaire: SOMFY ACTIVITES SA, 74300 Cluses (FR)
(72) Inventeur: CAVAREC, Pierre Emmanuel, F-74130 Mont Saxonnex (FR)
(74) Mandataire: Verriest, Philippe
(86) Numéro de dépôt international: PCT/FR2014/053500
(87) Numéro de publication internationale: WO 2015/097393

(56) Documents cités:
- WO-A1-2011/072332
- US-B1- 6 439 469
- US-B1- 8 600 561

## Description

La présente invention concerne un procédé et un terminal pour la prévision du comportement d'une grandeur représentative du confort intérieur d'un bâtiment.

La grandeur représentative du confort intérieur peut être une température, un degré de luminosité ou un degré d'hygrométrie.

Un occupant d'un bâtiment dispose d'un ensemble d'éléments actifs (moteurs de volets roulant, climatisation, chauffage) ayant une influence sur l'évolution de la grandeur représentative du confort intérieur.

Néanmoins, il est difficile, notamment pour un utilisateur qui n'est pas spécialiste des transferts thermiques, de prévoir l'impact du pilotage de ces éléments actifs, tel que le réglage du chauffage ou l'ouverture d'un volet, sur l'évolution de la grandeur représentative du confort intérieur.

En effet, ces éléments actifs peuvent avoir des influences combinées ou antagonistes sur cette évolution, celle-ci étant également influencée par les caractéristiques thermiques du bâtiment et les transferts thermiques entre le bâtiment et l'extérieur.

Le brevet américain US 8 600 561 enseigne une commande de chauffage radiant ainsi qu'un procédé pour un système de contrôle environnemental.

Il est également connu, notamment par le brevet américain US 6 439 469 un appareil prédictif pour réguler ou contrôler les variables d'alimentation.

La présente invention vise à résoudre tout ou partie des inconvénients mentionnés ci-dessus.

A cet effet, la présente invention concerne un procédé de prévision de l'évolution temporelle d'une grandeur représentative du confort intérieur d'un bâtiment telle qu'une température, un degré de luminosité ou un degré d'hygrométrie, comprenant les étapes consistant à :
- disposer d'un modèle de prévision de l'évolution temporelle de la grandeur représentative du confort intérieur,
- acquérir au moins une première valeur de mesure de la grandeur représentative du confort intérieur à un premier instant donné,
- disposer d'une première prévision de l'évolution temporelle d'une grandeur représentative des conditions climatiques extérieures sur un intervalle de temps,
- disposer de données représentatives des apports thermiques à l'intérieur du bâtiment et/ou des échanges thermiques du bâtiment avec l'extérieur,
- établir une seconde prévision de l'évolution temporelle de la grandeur représentative du confort intérieur en appliquant le modèle de prévision à l'au moins une première valeur de mesure, à la première prévision et aux données représentatives,
   - ladite seconde prévision comprend une estimation de la valeur de la grandeur représentative du confort intérieur pour au moins un second instant donné postérieur au premier instant donné,
   - au moins une modification, intervenant à un instant donné, desdites données représentatives est prise en compte pour l'application du modèle de prévision dans l'étape d'établissement de la seconde prévision de évolution temporelle de la grandeur représentative du confort intérieur,
   - l'au moins une modification des données représentatives comprend une estimation d'un changement envisagé postérieurement au premier instant donné des apports thermiques à l'intérieur du bâtiment et/ou des échanges thermiques du bâtiment avec l'extérieur.

Les données représentatives des apports thermiques à l'intérieur du bâtiment correspondent par exemple à l'influence de la programmation du chauffage ou de la climatisation du bâtiment.

Les données représentatives des échanges thermiques du bâtiment avec l'extérieur correspondent par exemple à l'influence de l'ouverture programmée des volets et fenêtres ou encore de la venue dans le bâtiment d'un nombre déterminé de personnes.

La prise en compte de ces données permet de préciser les estimations réalisées.

Les modifications des données représentatives des apports thermiques à l'intérieur du bâtiment peuvent être à titre d'exemple issues du temps de fonctionnement et du réglage du thermostat d'un chauffage du bâtiment.

Les modifications des données représentatives des échanges thermiques du bâtiment avec l'extérieur peuvent correspondre à des temps d'ouverture et de fermeture de fenêtres ou de volets.

La seconde prévision de l'évolution temporelle de la grandeur représentative du confort intérieur du bâtiment prévoit non seulement de tenir compte de la première prévision, qui peut être à titre d'exemple le bulletin météorologique, mais également de la première valeur de mesure.

Il apparaît ainsi que la seconde prévision est adaptée à partir de conditions réelles et ne se base pas seulement sur des prévisions. Ceci correspond à un calage dynamique du modèle de prévision. La seconde prévision évolue ainsi constamment à chaque mise en œuvre du procédé.

La seconde prévision peut notamment être réalisée pour un ensemble discret ou continu de seconds instants futurs, ou postérieurs au premier instant, constituant par exemple une fenêtre temporelle de prévision de la grandeur représentative du confort intérieur du bâtiment, en particulier d'une durée de quelques heures à quelques jours.

La grandeur représentative du confort intérieur peut être par exemple une température, un degré de luminosité ou un degré d'hygrométrie.

A titre d'exemple, en considérant que la grandeur représentative du confort intérieur du bâtiment peut être la température intérieure et que la température intérieure mesurée est plus faible que la température intérieure prévue initialement par la seconde prévision, alors les températures intérieures ultérieures estimées seront revues.

Grâce aux dispositions selon l'invention, il est possible d'estimer la valeur d'une grandeur représentative du confort intérieur, par exemple la température, à un instant futur en fonction d'une mesure réelle et des conditions climatiques extérieures. En particulier, il est possible de prévoir dans un cas de fortes chaleurs la température maximale dans la journée.

Selon un aspect de l'invention, ladite modification peut être renseignée par un utilisateur, de préférence pour des données représentatives non mesurables, telles que le réglage du thermostat d'un chauffage ne comprenant pas de moyens d'enregistrement dudit réglage.

Selon un autre aspect de l'invention, le procédé de prévision peut comprendre une autre étape consistant à comparer la modification renseignée par l'utilisateur avec d'autres données représentatives connues.

Ainsi la modification renseignée par l'utilisateur peut être validée ou non suivant sa vraisemblance par rapport aux données représentatives connues, telles que celles provenant de capteurs de températures ou d'enregistrements de réglages d'appareils comme un chauffage.

Suivant un exemple de fonctionnement, ces dispositions peuvent permettre en période de canicule d'obtenir le matin une estimation de la température dans le bâtiment l'après-midi et ainsi de prévoir la température intérieure l'après-midi en modifiant des évènements programmés comme la fermeture des volets et la mise en marche de la climatisation.

Suivant un autre exemple de fonctionnement, une modification envisagée postérieurement au premier instant donné, consiste pour un utilisateur à renseigner ses propres prévisions d'apports thermiques, notamment des prévisions dues à une augmentation du nombre de personnes dans le bâtiment ou à l'ouverture de fenêtres.

Ainsi la mise en œuvre du procédé de prévision donne accès en temps réel à une estimation de la valeur de la grandeur représentative du confort intérieur, ce qui permet de comparer plusieurs scénarii de programmation d'événement de type ouverture fermeture de volets, mise en marche ou arrêt de la climatisation.

En comparant les différents scénarii, il devient possible d'élaborer la meilleure stratégie à adopter, qui peut être à titre d'exemple de fermer les volets en anticipation de période d'ensoleillement plutôt que de mettre en marche la climatisation.

Selon un aspect de l'invention, on établit une pluralité de secondes prévisions de l'évolution temporelle de la grandeur représentative du confort intérieur en prenant en compte sélectivement une pluralité correspondante de modifications distinctes, ou une pluralité correspondante d'ensembles distincts de modifications, envisagées postérieurement au premier instant donné, des données représentatives pour l'application du modèle de prévision dans l'étape d'établissement de la pluralité de secondes prévisions de l'évolution temporelle de la grandeur représentative du confort intérieur.

Ces dispositions permettent de faciliter la présentation à l'utilisateur de différents scénarii possibles.

Selon un aspect de l'invention, le procédé de prévision comprend une étape supplémentaire consistant à sélectionner, parmi la pluralité de secondes prévisions établies, une prévision envisagée et à générer un ordre de commande pour obtenir ladite prévision envisagée.

L'ordre de commande correspond à la modification ou l'ensemble de modifications des données représentatives pour obtenir ladite prévision envisagée en appliquant le modèle de prévision.

Il apparait ainsi que cette dernière étape consiste à privilégier un scénario parmi les scénarii générés. Une fois le scénario sélectionné, le procédé appliqué permet d'obtenir des instructions ou ordre de commande en vue d'obtenir la prévision envisagée.

Selon un exemple de réalisation, la pluralité de secondes prévisions établies peut correspondre à des températures plus ou moins élevées au cours de la journée à l'intérieur du bâtiment.

Ainsi lorsqu'un utilisateur sélectionne une température souhaitée, c'est-à-dire un scénario envisagé, le procédé permet d'obtenir les actions à réaliser, ou ordre de commande, pour l'adaptation des données représentatives. Il peut s'agir par exemple d'augmenter le chauffage.

Selon un aspect de l'invention, lesdites données représentatives comprennent en outre une information d'un changement des apports thermiques à l'intérieur du bâtiment et/ou des échanges thermiques du bâtiment avec l'extérieur intervenu antérieurement au premier instant donné.

Selon un aspect de l'invention, la période de temps est une période antérieure au premier instant. Cet aspect correspond notamment à une phase d'apprentissage du modèle.

Ainsi il apparait que la modification des données représentatives correspond à la prise en compte d'événements ayant pour conséquence de changer ponctuellement ou durablement le comportement thermique du bâtiment.

Par évènement durable on entend par exemple le remplacement d'une fenêtre simple vitrage par une fenêtre double vitrage améliorant ainsi l'isolation.

Les événements ponctuels correspondent par exemple à des événements occasionnés par le comportement passé de l'utilisateur, par exemple des ouvertures de portes, fenêtres ou volets.

Selon un aspect de l'invention, le procédé de prévision comprend en outre une étape d'acquisition une seconde valeur de mesure de la grandeur représentative des conditions climatiques extérieures au bâtiment.

On considère ladite seconde valeur de mesure pour l'application du modèle de prévision dans l'étape d'établissement de la seconde prévision de l'évolution temporelle de la grandeur représentative du confort intérieur.

En disposant de la seconde valeur de mesure en plus de la première valeur de mesure, le calage dynamique du modèle de prévision évoqué précédemment est plus précis.

Ainsi si la température intérieure mesurée et la température extérieure mesurée sont différentes que celles prévues initialement, le procédé de prévision en tiendra compte.

Selon un aspect de l'invention, le procédé de prévision comprend en outre une étape consistant à disposer de données supplémentaires comprenant une pluralité de valeurs de la grandeur représentative du confort intérieur en fonction d'une heure de la journée, l'application du modèle de prévision dans l'étape d'établissement de la seconde prévision de l'évolution temporelle de la grandeur représentative du confort intérieur prenant en compte lesdites données supplémentaires.

Ainsi, à titre d'exemple, les données supplémentaires peuvent comprendre une pluralité de températures intérieures variant au cours de la journée. Il peut s'agir notamment d'un profil de températures dont les températures sont plus faibles durant la nuit.

Selon un aspect de l'invention, les données supplémentaires comprennent en outre une pluralité de valeurs de la grandeur représentative des conditions climatiques extérieures en fonction de l'heure de la journée.

De préférence, ladite pluralité de valeurs de la grandeur représentative du confort intérieur et/ou la pluralité de valeurs de la grandeur représentative des conditions climatiques extérieures sont également fonction de la date. Les différences entre saisons peuvent ainsi être considérées.

En particulier, les données supplémentaires correspondent à des mesures antérieures au premier instant. Ceci correspond également à la phase d'apprentissage du modèle de prévision.

Cette disposition permet d'adapter le modèle de prévision selon les conditions connues auxquelles a été confronté le bâtiment par le passé. Il peut s'agir par exemple d'un relevé de température à l'intérieur et à l'extérieur du bâtiment en fonction de la date et de l'heure durant une année passée.

Selon un aspect de l'invention, le procédé comprend en outre une étape d'acquisition d'une pluralité de valeurs de mesure de la grandeur représentative du confort intérieur, l'acquisition étant réalisée de manière continue et l'application du modèle de prévision dans l'étape d'établissement de la seconde prévision de l'évolution temporelle de la grandeur représentative du confort intérieur prenant en compte ladite pluralité de valeurs de mesure de manière continue.

La phase d'apprentissage mentionnée ci-avant correspond à la prise en compte d'une part de valeurs enregistrées durant le passé et d'autre part des valeurs acquises durant la mise en œuvre du procédé.

Selon un aspect de l'invention, on acquiert et on considère une pluralité de valeurs de mesure de grandeurs représentatives des conditions climatiques extérieures de manière continue pour l'application du modèle de prévision.

La présente invention concerne également un produit programme d'ordinateur comprenant des portions de code de programme pour l'exécution des étapes d'un procédé de prévision décrit ci-dessus.

La présente invention concerne en outre un terminal comprenant une unité de traitement agencée pour contenir et exécuter le produit programme d'ordinateur décrit ci-avant, le terminal comprenant en outre un élément d'affichage de l'estimation de la valeur de la grandeur représentative du confort intérieur d'un bâtiment pour au moins un second instant donné postérieur à un instant d'affichage dit premier instant donné.

Selon un aspect de l'invention, le terminal comprend un élément de sélection d'un ordre de commande. L'ordre de commande correspond à une modification ou un ensemble de modifications de données représentatives des apports thermiques à l'intérieur du bâtiment ou des échanges thermiques du bâtiment avec l'extérieur. L'élément de sélection est apte à transférer l'ordre de commande à l'unité de traitement.

De préférence l'élément de sélection est une interface tactile. En particulier, l'unité de traitement est agencée pour mémoriser l'ordre de commande.

Selon un aspect de l'invention, le terminal est agencé pour transférer au moins une donnée correspondant à un ordre de commande vers une unité agencée pour recevoir et interpréter cette donnée.

Selon un aspect de l'invention, le terminal comprend en outre une interface d'entrée agencée pour recevoir au moins une valeur d'une grandeur représentative du confort intérieur et/ou au moins une valeur d'une grandeur représentative des conditions extérieures au bâtiment.

Les valeurs ou données qu'est en mesure de traiter le terminal peuvent être transférées dans l'unité de traitement via l'interface d'entrée.

Selon un aspect de l'invention, ladite au moins une valeur de la grandeur représentative du confort intérieur et/ou ladite au moins une valeur d'une grandeur représentative des conditions extérieures au bâtiment correspond à une valeur de mesure et/ou une valeur instantanée.

Selon un aspect de l'invention, l'interface d'entrée est agencée pour recevoir des données représentatives correspondant à des apports thermiques à l'intérieur du bâtiment et des échanges thermiques du bâtiment avec l'extérieur.

La présente invention concerne aussi un système de gestion d'au moins une grandeur représentative du confort intérieur du bâtiment.

Le système comprend un élément programmable de fourniture d'apports thermiques à l'intérieur du bâtiment, l'élément programmable comprenant une interface apte à recevoir des ordres de commande pour la modification de la fourniture d'apports thermiques.

Le système comprend un terminal tel que décrit ci-avant, agencé pour échanger des données avec l'élément programmable.

La présente invention concerne également un bâtiment comprenant un système de gestion tel que décrit précédemment, le bâtiment comprenant en outre au moins un capteur de mesure de la grandeur représentative du confort intérieur et/ou au moins un capteur de mesure de la grandeur représentative des conditions climatiques extérieures, lesdits capteurs étant agencés pour transmettre des données au terminal via l'interface d'entrée.

De toute façon l'invention sera bien comprise à l'aide de la description qui suit en référence aux dessins schématiques annexés représentant, à titre d'exemple non limitatif, une forme d'exécution de ce procédé de prévision.
Figure 1 est une vue schématique d'un bâtiment comprenant un système de gestion de la température.
Figure 2 est un schéma des échanges thermiques du bâtiment avec l'extérieur.
Figure 3 est un schéma de principe d'un procédé de prévision.
Figure 4 est un schéma détaillé du procédé de prévision.

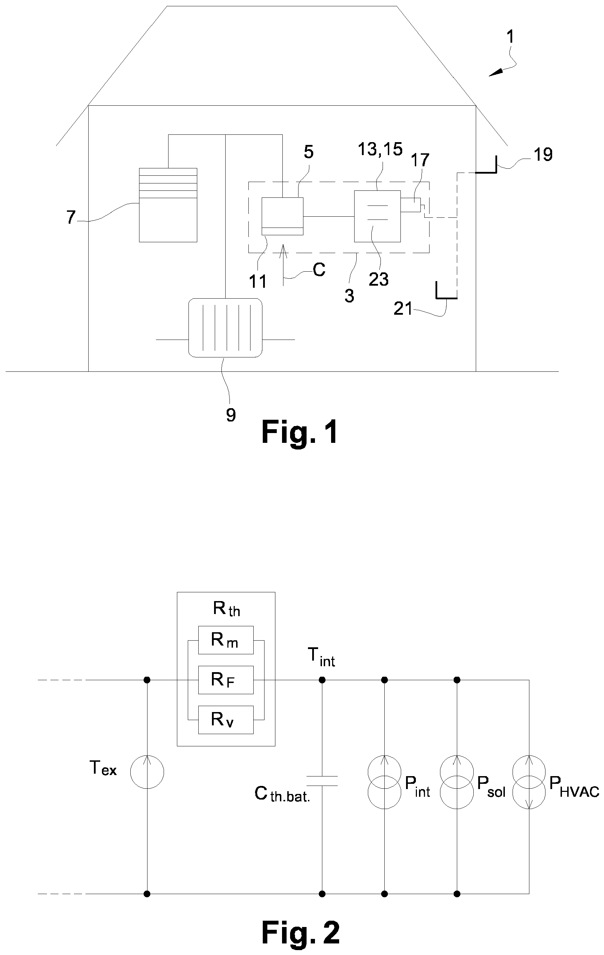

Comme illustré à la figure 1, un bâtiment 1 comprend un système de gestion 3 d'une grandeur représentative du confort intérieur GI. Dans le mode de réalisation présenté la grandeur représentative du confort intérieur GI du bâtiment 1 est une température intérieure Tint.

Dans des variantes non décrites, la grandeur représentative du confort intérieur GI du bâtiment 1 peut également être un degré de luminosité, un degré d'hygrométrie ou toute autre grandeur représentative du confort intérieur GI, ou encore une grandeur composite définie comme une fonction des grandeurs précédemment citées.

Selon le mode de réalisation présenté, le système de gestion 3 comprend un élément programmable 5 pour la fourniture d'apports thermiques à l'intérieur du bâtiment 1.

Le bâtiment 1 comprend en outre un volet électrique 7 dont l'ouverture et la fermeture est pilotée par l'élément programmable 5 et un chauffage 9 dont le réglage du thermostat est également piloté par l'élément programmable 5. Selon une variante non représentée, le chauffage 9 pourrait être remplacé ou associé à une installation de climatisation ou encore une installation utilisant une pompe à chaleur réversible.

L'élément programmable 5 comprend une interface 11 apte à recevoir un ordre de commande C pour la modification de la fourniture d'apport thermiques ou d'apport de frigories.

Ainsi, dans le mode de réalisation présenté l'interface 11 est apte à recevoir un ordre de commande C de la part d'un utilisateur choisissant le réglage du thermostat du chauffage 9 et l'ouverture du volet électrique 7.

Le système de gestion 3 comprend en outre un terminal 13 pourvu d'une unité de traitement 15 agencée pour contenir et exécuter un produit programme d'ordinateur comprenant des portions de code de programme pour l'exécution des étapes d'un procédé de prévision décrit plus loin dans le présent texte.

Le terminal 13 est également agencé pour recevoir des données en provenance de l'élément programmable 5. Il peut s'agir par exemple, de données relatives au réglage du thermostat du chauffage 9 ou à l'ouverture du volet électrique 7.

Ces données peuvent correspondre à plusieurs valeurs sur une plage de temps passée ou future si une programmation du chauffage 9 et du volet électrique 7 a été définie.

Le terminal 13 comprend également une interface d'entrée 17 agencée pour recevoir et transférer vers l'unité de traitement 15 des données en provenance de capteurs 19, 21.

Dans le mode de réalisation présenté, le bâtiment 1 comprend un premier capteur 19 de température agencé pour mesurer une température extérieure Tex au bâtiment 1 et un second capteur 21 de température agencé pour mesurer la température intérieure Tint.

Comme illustré à la figure 1, le premier capteur 19 et le second capteur 21 sont agencés pour transférer des données relatives aux mesures de températures effectuées vers l'interface d'entrée 17 du terminal 13.

Le terminal 13 comprend en outre un élément d'affichage 23 pour fournir une estimation de la valeur de la température intérieure Tint suite à la mise en œuvre du procédé de prévision décrit plus loin.

L'élément d'affichage 23 est agencé pour présenter différentes prévisions de température intérieure Tint, par exemple sous forme de courbes de différentes couleurs, selon les possibilités de pilotage de l'élément programmable 5 offert à l'utilisateur. Il s'agit notamment de la programmation du chauffage 9 ou de l'ouverture et la fermeture du volet électrique 7.

Comme illustré à la figure 2, les puissances thermiques devant être prises en compte pour la définition des échanges thermiques entre le bâtiment 1 et l'extérieur comprennent les apports internes, les apports externes et la résistance thermique Rₜₕ du bâtiment 1.

Les apports internes correspondent aux apports dus à la climatisation ou au chauffage P_{HVAC}, aux appareils et personnes Pᵢₙₜ comprises dans le bâtiment 1. Les apports externes correspondent aux apports dus au soleil Pₛₒₗ et sont également fonction de l'ouverture du volet électrique 7.

La résistance thermique du bâtiment Rₜₕ comprend la résistance thermique des murs Rₘ, la résistance thermique des fenêtres R_{f} et des ouvertures pour l'aération Rᵥ.

Suite à la présentation du bâtiment 1 et du système de gestion 3, nous allons détailler ci-après le procédé de prévision de la grandeur représentative du confort intérieur GI.

La première étape E1 consiste à disposer d'un modèle de prévision M prenant en compte les puissances thermiques définissant les échanges thermiques entre le bâtiment et l'extérieur détaillées à la figure 2.

Ainsi, le modèle de prévision M est à observer comme une boite noire donnant une estimation de la température intérieure Tint du bâtiment 1. Les étapes suivantes du procédé ont pour objet d'apporter des informations supplémentaires pour affiner la détermination de l'estimation de la température intérieure Tint.

La seconde étape E2 consiste à acquérir une première valeur de mesure MGI de la température intérieure Tint à un premier instant donné t1 par l'intermédiaire du second capteur 21.

La troisième étape E3 consiste à disposer d'une première prévision PGE de l'évolution temporelle d'une grandeur représentative des conditions climatiques extérieures GE sur un intervalle de temps.

Dans le mode de réalisation présenté, cette grandeur relative des conditions climatiques extérieures GE est la température extérieure Tex et l'intervalle de temps est une journée de vingt-quatre heures entre minuit et minuit.

La première prévision PGE provient en outre d'un bulletin météorologique transféré à l'unité de traitement 15 du terminal 13 via l'interface d'entrée 17.

La quatrième étape E4 consiste alors à établir une seconde prévision PGI de l'évolution temporelle de la température intérieure Tint en appliquant le modèle de prévision M.

L'application du modèle de prévision M prend en compte la première valeur de mesure MGI et à la première prévision PGE. La seconde prévision PGI comprend une estimation de la valeur de la température intérieure Tint pour au moins un second instant donné t2 postérieur au premier instant donné t1.

L'estimation de la valeur de la température intérieure Tint du mode de réalisation présenté est une courbe de l'évolution temporelle de la température intérieure Tint pendant l'intervalle de temps.

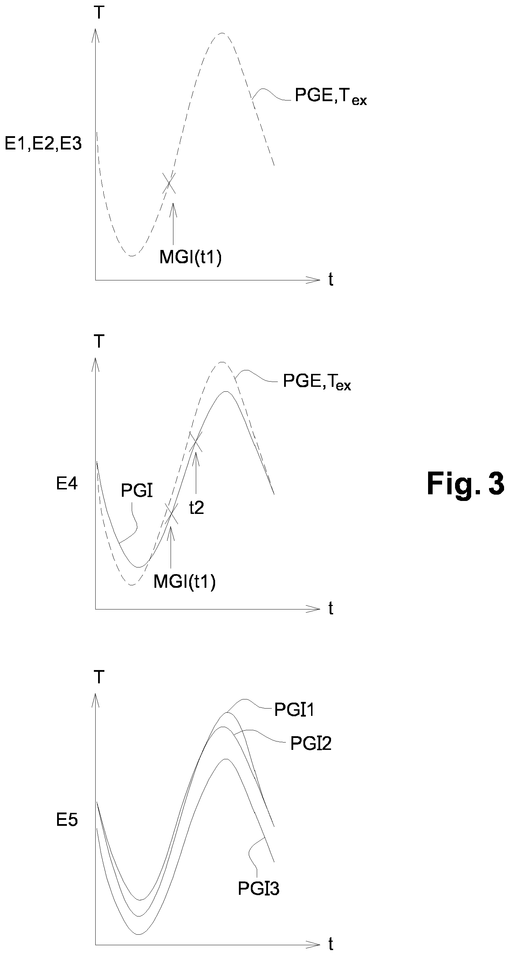

Les quatre étapes du procédé décrites ci-dessus et représentées à la figure 3 correspondent à un mode de mise en œuvre du procédé. La figure 3 comprend des graphiques de températures T en fonction du temps t.

Il en résulte une estimation fine de la température intérieure Tint du bâtiment.

En effet le procédé de prévision prend en compte une valeur mesurée de la température intérieure et également les prévisions météorologiques pour recaler le modèle de prévision.

La deuxième étape E2 et la troisième étape E3 du procédé de prévision correspondant respectivement à l'acquisition de valeurs de mesure et à l'utilisation de données météorologiques et peuvent être exécutées indépendamment.

Leur ordre d'exécution n'a pas d'importance tant que ces deux étapes sont réalisées avant la quatrième étape E4.

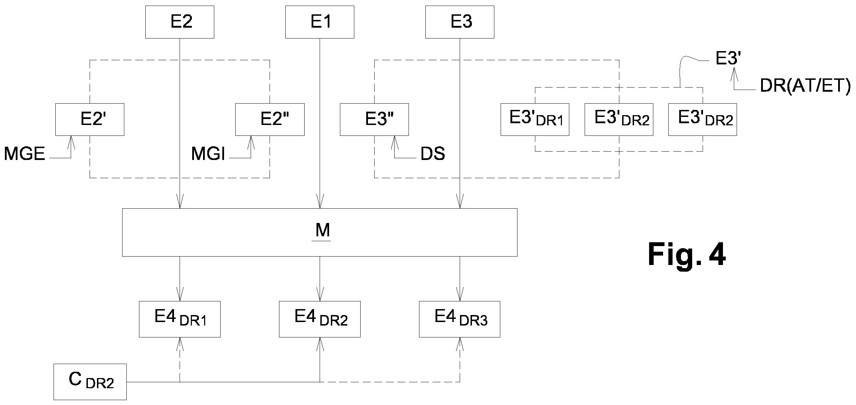

La figure 4 présente d'autres étapes pouvant être réalisées de manière optionnelles en parallèle de la deuxième étape E2 et de la troisième étape E3 et également à la suite de la quatrième étape E4.

Tout d'abord l'étape E2' consiste à acquérir une seconde valeur de mesure MGE d'une température extérieure Tex à partir du premier capteur 19. L'acquisition de cette seconde valeur de mesure MGE peut être concomitante ou non de l'acquisition de la première valeur de mesure MGI.

Selon une variante de cette étape E2', une pluralité de valeurs de mesure MGE de la température extérieure Tex peut être acquise de manière continue.

L'étape E2" consiste à l'acquisition d'une pluralité de valeurs de mesure MGI de la température intérieure Tint, réalisée de manière continue. L'évolution de la température intérieure Tint est alors continuellement prise en compte dans la mise en œuvre du procédé de prévision.

L'étape E3' consiste à disposer de données représentatives DR des apports thermiques à l'intérieur du bâtiment AT et/ou des échanges thermiques du bâtiment avec l'extérieur ET.

Ces données représentatives DR peuvent comprendre une estimation d'un changement envisagé postérieurement au premier instant donné t1 des apports thermiques à l'intérieur du bâtiment AT et/ou des échanges thermiques du bâtiment avec l'extérieur ET.

Ce changement envisagé peut correspondre à une modification due à un changement ponctuel comme l'ouverture du volet électrique 7 pendant un temps déterminé ou un évènement durable, comme le remplacement d'un vitre simple vitrage par une vitre double vitrage.

Il est également possible de prendre en compte une pluralité de modifications distinctes, ou une pluralité d'ensembles distincts de modifications correspondant à différents scénarii traduisant des alternatives envisageables par l'utilisateur pour le réglage du système de gestion 3.

Cette situation est représentée par les cases E3'_{DR1}, E3'_{DR2} et E3'_{DR3}. Chacune de ces cases représente la prise en compte par le modèle de prévision M de données représentatives DR différentes, à savoir DR1, DR2 et DR3.

Ces données représentatives DR peuvent être des données antérieures au premier instant donné t1, comme le réglage du thermostat de chauffage 9 en fonction de l'heure et du jour durant l'année passée. Il peut s'agir également du temps d'ouverture et de fermeture du volet électrique 7 en fonction de l'heure et du jour durant l'année passée.

Les données antérieures au premier instant donné, peuvent être renseignées par un utilisateur via une interface dédiée du terminal 13. Il peut s'agir de données qui ne peuvent être mesurées comme le réglage d'un chauffage ne comprenant pas d'enregistreur du réglage de son thermostat.

L'unité de traitement 15 est également agencée pour recouper ces données antérieures renseignées par l'utilisateur avec des données représentatives DR déjà connues. Ainsi la vraisemblance des données renseignées par l'utilisateur est contrôlée pour éviter la prise en compte d'informations erronées.

Ces données représentatives peuvent être postérieures au premier instant donné t1, comme la programmation d'une climatisation, du chauffage 9 ou de l'ouverture du volet électrique 7 sur les prochaines vingt-quatre heures.

L'étape E3" consiste à disposer de données supplémentaires DS correspondant à une pluralité de valeurs de la grandeur représentative du confort intérieur GI en fonction d'une heure de la journée.

A titre d'exemple, il peut s'agir de valeurs de températures intérieures Tint en fonction de l'heure et de la date de l'année passée. Il peut s'agir de températures extérieures Tex également connues de l'année précédentes.

Notamment les données supplémentaires DS comprendront des informations sur le comportement habituel de l'utilisateur, par exemple si l'utilisateur a pour habitude d'accueillir des personnes supplémentaires dans le bâtiment à des heures précises de la journée de manière récurrente ou si l'utilisateur a pour habitude d'ouvrir les fenêtres pendant un temps déterminé le matin en été

Il convient de faire un parallèle entre les étapes E2" et E3" qui présentent des similitudes. L'étape E2" correspond à l'acquisition d'une pluralité de valeur de mesures et l'étape E3" à l'acquisition de données existantes.

Bien que les valeurs des températures intérieures Tint et de températures extérieures Tex obtenues par ces deux étapes le soient de manière différente, elles constituent toutes deux des données qui seront prises en compte pour l'application du modèle de prévision M.

Ainsi l'acquisition de données suivant les étapes E2" et E3" correspondent à une phase d'apprentissage du procédé.

Selon une possibilité de réalisation, le modèle de prévision M est mis en œuvre par un algorithme de type réseau de neurones ou un algorithme génétique pour que l'accumulation de données favorise la précision de l'estimation de la valeur de la température intérieure Tint.

Il apparait que le modèle de prévision M peut être partiellement ou entièrement expérimental dans le sens où il prend en compte pour son application des habitudes des utilisateurs, des valeurs mesurées et des réglages d'appareils comme le chauffage 9 relativement aux valeurs de températures intérieures obtenues dans ces conditions.

Ainsi, selon un d'exemple, le procédé de prévision intègre automatiquement l'habitude de l'utilisateur d'ouvrir les fenêtres tous les jours entre 8h et 9h pendant 15 minutes au même titre qu'une caractéristique propre du bâtiment comme la résistance thermique d'un mur.

Il apparait également que le procédé de prévision est en constante adaptation en fonction des modifications des habitudes de l'utilisateur.

Comme illustré à la figure 4, l'application du modèle de prévision M prenant en compte les étapes E3'_{DR1}, E3'_{DR2} et E3'_{DR3} engendre trois secondes prévision correspondantes E4_{DR1}, E4_{DR2} et E4_{DR3}. Ainsi différents scénarii de prévision peuvent être obtenus de manière simultanée par le procédé de prévision.

Le but est de permettre à l'utilisateur de comparer ces différents scénarii et de choisir le plus approprié. Par exemple, en période de canicule l'utilisateur peut le matin comparer un premier scénario correspondant à la fermeture du ou des volets électriques 7 et un second scénario correspondant à la mise en fonctionnement de la climatisation pour choisir le scénario le plus approprié suivant ses critères préférentiels. Il est également possible de choisir de privilégier la fermeture des volets sur une ou plusieurs faces du bâtiment selon leur orientation en comparant l'influence de ces fermetures sur la prévision de température. Ce dernier choix pourra correspondre à un compromis pour l'utilisateur qui minimisera les apports de chaleurs sur les faces les plus exposées au soleil tout en conservant néanmoins une lumière naturelle, et en minimisant l'usage d'une climatisation, ou en ne l'utilisant pas du tout. Le choix se présentera à l'utilisateur par exemple sous la forme de plusieurs courbes d'évolution de la température superposées sur un même graphique.

L'étape E5 illustre cette possibilité : elle consiste pour l'utilisateur à sélectionner un scénario ou une prévision parmi les trois possibilités E4_{DR1}, E4_{DR2} et E4_{DR3}.

Ces trois possibilités sont également présenté graphiquement à la figure 3 sous formes de courbes de grandeurs représentatives du confort intérieur PGI1, PGI2 et PGI3 correspondant respectivement aux trois possibilités E4_{DR1}, E4_{DR2} et E4_{DR3}.

Le terminal affiche ensuite un ordre de commande C_{DR2} correspondant au scénario choisi par l'utilisateur. L'ordre de commande C_{DR2} peut consister à un réglage du chauffage 9 ou à la programmation de la fermeture du volet électrique 7.

L'utilisateur est alors apte à renseigner l'ordre de commande C_{DR2} via l'interface du système de gestion 3 pour établir les réglages déterminés dans l'étape E5 du procédé de prévision.

L'élément d'affichage 23 comprend également une interface tactile permettant à l'utilisateur de sélectionner l'ordre de commande C_{DR2} directement sur le terminal 13. Le terminal 13 est agencé pour transmettre cet ordre de commande C_{DR2} à l'élément programmable 5.

Le procédé de prévision présente des avantages multiples. D'une part il permet à un utilisateur d'obtenir d'une manière simple une estimation d'une grandeur représentative du confort intérieur GI qui soit fiable.

En effet, comme détaillé ci-dessus, on utilise des données prévisionnelles, comme le bulletin météorologique, des mesures de valeurs réelles, comme la température intérieure et la température extérieure, et des données statistiques comme les mesures réalisées les années précédente.

Il apparait également que ce procédé de prévision est auto-adaptatif et que l'accumulation des données correspond à une phase d'apprentissage.

Ainsi ce procédé peut être appliqué à tout bâtiment, même si ses caractéristiques, comme la résistance thermique de ses murs ne sont pas connues. Dans ce cas, l'accumulation de données provenant de mesures permet un ajustement progressif pour une application plus précise du modèle de prévision.

Comme il va de soi, l'invention ne se limite pas à la seule forme d'exécution de ce procédé de prévision, décrit ci-dessus à titre d'exemple, elle en embrasse au contraire toutes les variantes de réalisation.

## Revendications

1. Procédé de prévision de l'évolution temporelle d'une grandeur représentative du confort intérieur (GI) d'un bâtiment telle qu'une température, un degré de luminosité ou un degré d'hygrométrie, comprenant les étapes consistant à :
- (E1) disposer d'un modèle de prévision (M) de l'évolution temporelle de la grandeur représentative du confort intérieur (GI),
- (E2) acquérir au moins une première valeur de mesure (MGI) de la grandeur représentative du confort intérieur (GI) à un premier instant donné (t1),
- (E3) disposer d'une première prévision (PGE) de l'évolution temporelle d'une grandeur représentative des conditions climatiques extérieures (GE) sur un intervalle de temps,
- (E3') disposer de données représentatives (DR) des apports thermiques à l'intérieur du bâtiment (AT) et/ou des échanges thermiques du bâtiment avec l'extérieur (ET),
- (E4) établir une prévision (PGI) de l'évolution temporelle de la grandeur représentative du confort intérieur (GI) en appliquant le modèle de prévision (M) à l'au moins une première valeur de mesure (MGI), à la première prévision (PGE) et aux données représentatives (DR), ladite prévision (PGI) étant appelée seconde prévision (PGI),
ladite seconde prévision (PGI) comprenant une estimation de la valeur de la grandeur représentative du confort intérieur (GI) pour au moins un second instant donné (t2) postérieur au premier instant donné (t1),
au moins une modification, intervenant à un instant donné, desdites données représentatives (DR) est prise en compte pour l'application du modèle de prévision (M) dans l'étape (E4) d'établissement de la seconde prévision (PGI) de l'évolution temporelle de la grandeur représentative du confort intérieur (GI),
le procédé étant **caractérisé en ce que** l'au moins une modification des données représentatives (DR) comprend une estimation d'un changement envisagé postérieurement au premier instant donné (t1) des apports thermiques à l'intérieur du bâtiment (AT) et/ou des échanges thermiques du bâtiment avec l'extérieur (ET).

2. Procédé de prévision selon la revendication 1, dans lequel on établit une pluralité de secondes prévisions (PGI) de l'évolution temporelle de la grandeur représentative du confort intérieur (GI) en prenant en compte sélectivement une pluralité correspondante de modifications distinctes, ou une pluralité correspondante d'ensembles distincts de modifications, envisagées postérieurement au premier instant donné (t1), des données représentatives (DR) pour l'application du modèle de prévision (M) dans l'étape (E4) d'établissement de la pluralité de secondes prévisions (PGI) de l'évolution temporelle de la grandeur représentative du confort intérieur (GI).

3. Procédé de prévision selon la revendication 2, comprenant une étape supplémentaire (E5) consistant à sélectionner, parmi la pluralité de secondes prévisions (PGI) établies, une prévision envisagée et à générer un ordre de commande pour obtenir ladite prévision envisagée, l'ordre de commande correspondant à la modification ou l'ensemble de modifications des données représentatives (DR) pour obtenir ladite prévision envisagée en appliquant le modèle de prévision (M).

4. Procédé de prévision selon l'une des revendications 1 à 3, dans lequel lesdites données représentatives (DR) comprennent en outre une information d'un changement des apports thermiques à l'intérieur du bâtiment (AT) et/ou des échanges thermiques du bâtiment avec l'extérieur (ET) intervenu antérieurement au premier instant donné (t1).

5. Procédé de prévision selon l'une des revendications précédentes, comprenant en outre une étape (E2') d'acquisition une valeur de mesure (MGE) de la grandeur représentative des conditions climatiques extérieures (GE) au bâtiment, ladite valeur de mesure (MGE) étant appelée seconde valeur de mesure (MGE), et dans lequel on considère ladite seconde valeur de mesure (MGE) pour l'application du modèle de prévision (M) dans l'étape (E4) d'établissement de la seconde prévision (PGI) de l'évolution temporelle de la grandeur représentative du confort intérieur (GI).

6. Procédé de prévision selon l'une des revendications précédentes, comprenant en outre une étape (E3") consistant à disposer de données supplémentaires (DS) comprenant une pluralité de valeurs de la grandeur représentative du confort intérieur (GI) en fonction d'une heure de la journée, l'application du modèle de prévision (M) dans l'étape (E4) d'établissement de la seconde prévision (PGI) de l'évolution temporelle de la grandeur représentative du confort intérieur (GI) prenant en compte lesdites données supplémentaires (DS).

7. Procédé de prévision selon l'une des revendications précédentes, comprenant en outre une étape (E2") d'acquisition d'une pluralité de valeurs de mesure de la grandeur représentative du confort intérieur (GI), l'acquisition étant réalisée de manière continue et l'application du modèle de prévision (M) dans l'étape (E4) d'établissement de la seconde prévision (PGI) de l'évolution temporelle de la grandeur représentative du confort intérieur (GI) prenant en compte ladite pluralité de valeurs de mesure de manière continue.

8. Produit programme d'ordinateur comprenant des portions de code de programme pour l'exécution des étapes d'un procédé de prévision selon l'une quelconque des revendications précédentes.

9. Terminal (13) comprenant une unité de traitement (15) agencée pour contenir et exécuter le produit programme d'ordinateur selon la revendication précédente, le terminal (13) comprenant en outre un élément d'affichage (23) agencé pour présenter l'estimation de la valeur de la grandeur représentative du confort intérieur (GI) d'un bâtiment (1) pour au moins un second instant donné (t2) postérieur à un instant d'affichage dit premier instant donné (t1).

10. Terminal (13) selon la revendication précédente, comprenant un élément de sélection d'un ordre de commande (C), l'ordre de commande (C) correspondant à une modification ou un ensemble de modifications de données représentatives (DR) des apports thermiques à l'intérieur du bâtiment (AT) ou des échanges thermiques du bâtiment avec l'extérieur (ET), l'élément de sélection étant apte à transférer l'ordre de commande (C) à l'unité de traitement (15).

11. Terminal (13) selon l'une des revendications 9 ou 10, comprenant en outre une interface d'entrée (11) agencée pour recevoir au moins une valeur d'une grandeur représentative du confort intérieur (GI) et/ou au moins une valeur d'une grandeur représentative des conditions extérieures (GE) au bâtiment (1).

12. Terminal (13) selon la revendication précédente, dans lequel ladite au moins une valeur de la grandeur représentative du confort intérieur (GI) et/ou ladite au moins une valeur d'une grandeur représentative des conditions extérieures (GE) au bâtiment correspond à une valeur de mesure et/ou une valeur instantanée.

13. Système de gestion (3) d'au moins une grandeur représentative du confort intérieur (GI) du bâtiment, comprenant :
- un élément programmable (5) de fourniture d'apports thermiques à l'intérieur du bâtiment, l'élément programmable (5) comprenant une interface apte à recevoir des ordres de commande (C) pour la modification de la fourniture d'apports thermiques,
- un terminal (13) selon l'une des revendications 9 à 12, agencé pour échanger des données avec l'élément programmable (5).

14. Bâtiment (1) comprenant un système de gestion (3) selon la revendication 13, le bâtiment (1) comprenant en outre au moins un capteur de mesure (21) de la grandeur représentative du confort intérieur (GI) et/ou au moins un capteur de mesure (19) de la grandeur représentative des conditions climatiques extérieures (GE), lesdits capteurs étant agencés pour transmettre des données au terminal (13) via l'interface d'entrée (17).

## Patentansprüche

1. Verfahren zur Vorhersage der zeitlichen Entwicklung einer für den Innenraumkomfort eines Gebäudes repräsentativen Größe (GI), wie etwa einer Temperatur, eines Helligkeitsgrads oder eines Feuchtigkeitsgrads, umfassend die Schritte, die darin bestehen:
- (E1) über ein Modell (M) zur Vorhersage der zeitlichen Entwicklung der für den Innenraumkomfort repräsentativen Größe (GI) zu verfügen,
- (E2) mindestens einen ersten Messwert (MGI) der für den Innenraumkomfort repräsentativen Größe (GI) zu einem ersten gegebenen Zeitpunkt (t1) zu erfassen,
- (E3) über eine erste Vorhersage (PGE) der zeitlichen Entwicklung einer für die klimatischen Außenbedingungen repräsentativen Größe (GE) über ein Zeitintervall zu verfügen,
- (E3') über repräsentative Daten (DR) der Wärmeeinträge in das Innere des Gebäudes (AT) und/oder der Wärmeaustausche des Gebäudes mit der Außenumgebung (ET) zu verfügen,
- (E4) eine Vorhersage (PGI) der zeitlichen Entwicklung der für den Innenraumkomfort repräsentativen Größe (GI) unter Anwendung des Vorhersagemodells (M) auf den mindestens einen ersten Messwert (MGI), auf die erste Vorhersage (PGE) und auf die repräsentativen Daten (DR) zu erstellen, wobei die Vorhersage (PGI) als zweite Vorhersage (PGI) bezeichnet wird,
wobei die zweite Vorhersage (PGI) eine Schätzung des Werts der für den Innenraumkomfort repräsentativen Größe (GI) für mindestens einen zweiten gegebenen Zeitpunkt (t2) nach dem ersten gegebenen Zeitpunkt (t1) umfasst,
mindestens eine Modifikation der repräsentativen Daten (DR), die zu einem gegebenen Zeitpunkt eintritt, für die Anwendung des Vorhersagemodells (M) im Schritt (E4) des Erstellens der zweiten Vorhersage (PGI) der zeitlichen Entwicklung der für den Innenraumkomfort repräsentativen Größe (GI) berücksichtigt wird,
wobei das Verfahren **dadurch gekennzeichnet ist, dass** die mindestens eine Modifikation der repräsentativen Daten (DR) eine Schätzung einer Veränderung der Wärmeeinträge in das Innere des Gebäudes (AT) und/oder der Wärmeaustausche des Gebäudes mit der Außenumgebung (ET) umfasst, die nach dem ersten gegebenen Zeitpunkt (t1) geplant ist.

2. Vorhersageverfahren nach Anspruch 1, wobei eine Vielzahl von zweiten Vorhersagen (PGI) der zeitlichen Entwicklung der für den Innenraumkomfort repräsentativen Größe (GI) unter selektiver Berücksichtigung einer entsprechenden Vielzahl unterschiedlicher Modifikationen, oder einer entsprechenden Vielzahl unterschiedlicher Sätze von Modifikationen der repräsentativen Daten (DR), die nach dem ersten gegebenen Zeitpunkt (t1) geplant sind, für die Anwendung des Vorhersagemodells (M) im Schritt (E4) des Erstellens der Vielzahl von zweiten Vorhersagen (PGI) der zeitlichen Entwicklung der für den Innenraumkomfort repräsentativen Größe (GI) erstellt werden.

3. Vorhersageverfahren nach Anspruch 2, das einen zusätzlichen Schritt (E5) umfasst, der darin besteht, aus der Vielzahl von zweiten Vorhersagen (PGI), die erstellt wurden, eine geplante Vorhersage auszuwählen, und einen Steuerbefehl zu erzeugen, um die geplante Vorhersage zu erhalten, wobei der Steuerbefehl der Modifikation oder dem Satz von Modifikationen der repräsentativen Daten (DR) entspricht, um die geplante Vorhersage unter Anwendung des Vorhersagemodells (M) zu erhalten.

4. Vorhersageverfahren nach einem der Ansprüche 1 bis 3, wobei die repräsentativen Daten (DR) weiter eine Information über eine Veränderung der Wärmeeinträge in das Innere des Gebäudes (AT) und/oder der Wärmeaustausche des Gebäudes mit der Außenumgebung (ET) umfassen, die vor dem ersten gegebenen Zeitpunkt (t1) eingetreten ist.

5. Vorhersageverfahren nach einem der vorstehenden Ansprüche, das weiter einen Schritt (E2') des Erfassens eines Messwerts (MGE) der für die klimatischen Außenbedingungen des Gebäudes repräsentativen Größe (GE) umfasst, wobei der Messwert (MGE) als zweiter Messwert (MGE) bezeichnet wird, und wobei der zweite Messwert (MGE) für die Anwendung des Vorhersagemodells (M) im Schritt (E4) des Erstellens der zweiten Vorhersage (PGI) der zeitlichen Entwicklung der für den Innenraumkomfort repräsentativen Größe (GI) berücksichtigt wird.

6. Vorhersageverfahren nach einem der vorstehenden Ansprüche, das weiter einen Schritt (E3") umfasst, der darin besteht, über zusätzliche Daten (DS) zu verfügen, die eine Vielzahl von Werten der für den Innenraumkomfort repräsentativen Größe (GI) in Abhängigkeit von einer Tageszeit umfassen, wobei die Anwendung des Vorhersagemodells (M) im Schritt (E4) des Erstellens der zweiten Vorhersage (PGI) der zeitlichen Entwicklung der für den Innenraumkomfort repräsentativen Größe (GI) die zusätzlichen Daten (DS) berücksichtigt.

7. Vorhersageverfahren nach einem der vorstehenden Ansprüche, das weiter einen Schritt (E2") des Erfassens einer Vielzahl von Messwerten der für den Innenraumkomfort repräsentativen Größe (GI) umfasst, wobei das Erfassen kontinuierlich ausgeführt wird, und wobei die Anwendung des Vorhersagemodells (M) im Schritt (E4) des Erstellens der zweiten Vorhersage (PGI) der zeitlichen Entwicklung der für den Innenraumkomfort repräsentativen Größe (GI) die Vielzahl von Messwerten kontinuierlich berücksichtigt.

8. Computerprogrammprodukt, das Programmcodeabschnitte für das Ausführen der Schritte eines Vorhersageverfahrens nach einem der vorstehenden Ansprüche umfasst.

9. Endgerät (13), das eine Verarbeitungseinheit (15) umfasst, die dafür eingerichtet ist, das Computerprogrammprodukt nach dem vorstehenden Anspruch zu enthalten und auszuführen, wobei das Endgerät (13) weiter ein Anzeigeelement (23) umfasst, das dafür eingerichtet ist, die Schätzung des Werts der für den Innenraumkomfort eines Gebäudes (1) repräsentativen Größe (GI) für mindestens einen zweiten gegebenen Zeitpunkt (t2) nach einem als erster gegebener Zeitpunkt (t1) bezeichneten Anzeigezeitpunkt darzustellen.

10. Endgerät (13) nach dem vorstehenden Anspruch, das ein Element zum Auswählen eines Steuerbefehls (C) umfasst, wobei der Steuerbefehl (C) einer Modifikation oder einem Satz von Modifikationen von repräsentativen Daten (DR) der Wärmeeinträge in das Innere des Gebäudes (AT) oder der Wärmeaustausche des Gebäudes mit der Außenumgebung (ET) entspricht, wobei das Auswahlelement in der Lage ist, den Steuerbefehl (C) an die Verarbeitungseinheit (15) zu übertragen.

11. Endgerät (13) nach einem der Ansprüche 9 oder 10, das weiter eine Eingangsschnittstelle (11) umfasst, die dafür eingerichtet ist, mindestens einen Wert einer für den Innenraumkomfort repräsentativen Größe (GI) und/oder mindestens einen Wert einer für die Außenbedingungen des Gebäudes (1) repräsentativen Größe (GE) zu empfangen.

12. Endgerät (13) nach dem vorstehenden Anspruch, wobei der mindestens eine Wert der für den Innenraumkomfort repräsentativen Größe (GI) und/oder der mindestens eine Wert einer für die Außenbedingungen des Gebäudes repräsentativen Größe (GE) einem Messwert und/oder einem Momentanwert entspricht.

13. System zur Verwaltung (3) mindestens einer für den Innenraumkomfort des Gebäudes repräsentativen Größe (GI), umfassend:
- ein programmierbares Element (5) zur Zufuhr von Energieeinträgen in das Innere des Gebäudes, wobei das programmierbare Element (5) eine Schnittstelle umfasst, die in der Lage ist, Steuerbefehle (C) zur Modifikation der Zufuhr von Wärmeeinträgen zu empfangen,
- ein Endgerät (13) nach einem der Ansprüche 9 bis 12, das dafür eingerichtet ist, Daten mit dem programmierbaren Element (5) auszutauschen.

14. Gebäude (1), das ein Verwaltungssystem (3) nach Anspruch 13 umfasst, wobei das Gebäude (1) weiter mindestens einen Sensor zum Messen (21) der für den Innenraumkomfort repräsentativen Größe (GI) und/oder mindestens einen Sensor zum Messen (19) der für die klimatischen Außenbedingungen repräsentativen Größe (GE) umfasst, wobei die Sensoren dafür eingerichtet sind, Daten über die Eingangsschnittstelle (17) an das Endgerät (13) zu übertragen.

## Claims

1. A method for forecasting the time evolution of a magnitude representative of the interior comfort (GI) of a building such as a temperature, a degree of brightness or a degree of hygrometry, comprising the steps consisting in:
- (E1) providing a model (M) for forecasting the time evolution of the magnitude representative of the interior comfort (GI),
- (E2) acquiring at least one first measurement value (MGI) of the magnitude representative of the interior comfort (GI) at a first given instant (t1),
- (E3) providing a first forecast (PGE) of the time evolution of a magnitude representative of the external weather conditions (GE) over a time interval,
- (E3') providing data (DR) representative of the thermal inputs inside the building (AT) and/or the thermal exchanges of the building with the outside (ET),
- (E4) establishing a forecast (PGI) of the time evolution of the magnitude representative of the interior comfort (GI) by applying the forecasting model (M) to the at least one first measurement value (MGI), to the first forecast (PGE) and to representative data (DR), said forecast (PGI) being called second forecast (PGI),
said second forecast (PGI) comprising an estimate of the value of the magnitude representative of the interior comfort (GI) for at least one second given instant (t2) subsequent to the first given instant (t1),
at least one modification, occurring at a given instant, of said representative data (DR) is taken into account for the application of the forecasting model (M) at step (E4) of establishing the second forecast (PGI) of the time evolution of the magnitude representative of the interior comfort (GI),
the method being **characterized in that** the at least one modification of the representative data (DR) comprises an estimate of a change considered subsequently to the first given instant (t1) of the thermal inputs inside the building (AT) and/or the thermal exchanges of the building with the outside (ET).

2. The forecasting method according to claim 1, wherein a plurality of second forecasts (PGI) of the time evolution of the magnitude representative of the interior comfort (GI) is established by selectively taking into account a corresponding plurality of distinct modifications, or a corresponding plurality of distinct sets of modifications, considered subsequently to the first given instant (t1), of the representative data (DR) for the application of the forecasting model (M) at step (E4) of establishing the plurality of second forecasts (PGI) of the time evolution of the magnitude representative of the interior comfort (GI).

3. The forecasting method according to claim 2, comprising an additional step (E5) consisting in selecting, amongst the plurality of second established forecasts (PGI), a considered forecast and in generating a control command to obtain said considered forecast, the control command corresponding to the modification or set of modifications of the representative data (DR) to obtain said considered forecast by applying the forecasting model (M).

4. The forecasting method according to any of claims 1 to 3, wherein said representative data (DR) further comprise information on a change of thermal inputs inside the building (AT) and/or heat exchanges of the building with the outside (ET) having occurred prior to the first given moment (t1).

5. The forecasting method according to any of the preceding claims, further comprising a step (E2') of acquiring a measurement value (MGE) of the magnitude representative of the weather conditions (GE) outside the building, said measurement value (MGE) being called second measurement value (MGE), and in which said second measurement value (MGE) is considered for the application of the forecasting model (M) at step (E4) of establishing the second forecast (PGI) of the time evolution of the magnitude representative of interior comfort (GI).

6. The forecasting method according to any of the preceding claims, further comprising a step (E3") consisting in providing additional data (DS) comprising a plurality of values of the magnitude representative of the interior comfort (GI) as a function of one hour of the day, the application of the forecasting model (M) at step (E4) of establishing the second forecast (PGI) of the time evolution of the magnitude representative of the interior comfort (GI) taking into account said additional data (DS).

7. The forecasting method according to any of the preceding claims, further comprising a step (E2") of acquiring a plurality of measurement values of the magnitude representative of the interior comfort (GI), the acquisition being carried out in a continuous manner and the application of the forecasting model (M) at step (E4) of establishing the second forecast (PGI) of the time evolution of the magnitude representative of the interior comfort (GI) taking into account said plurality of measurement values in a continuous manner.

8. A computer program product comprising portions of program code for the execution of the steps of a forecasting method according to any one of the preceding claims.

9. A terminal (13) comprising a processing unit (15) arranged to contain and execute the computer program product according to the preceding claim, the terminal (13) further comprising a display element (23) arranged to present the estimate of the value of the magnitude representative of the interior comfort (GI) of a building (1) for at least one second given instant (t2) subsequent to a display instant called first given instant (t1).

10. The terminal (13) according to the preceding claim, comprising an element for selecting a control command (C), the control command (C) corresponding to a modification or a set of modifications of data (DR) representative of the thermal inputs inside the building (AT) or the heat exchanges of the building with the outside (ET), the selection element being able to transfer the control command (C) to the processing unit (15).

11. The terminal (13) according to any of claims 9 or 10, further comprising an input interface (11) arranged to receive at least one value of a magnitude representative of the interior comfort (GI) and/or at least one value of a magnitude representative of the conditions (GE) outside the building (1).

12. The terminal (13) according to the preceding claim, wherein said at least one value of the magnitude representative of the interior comfort (GI) and/or said at least one value of a magnitude representative of the conditions (GE) outside the building corresponds to a measurement value and/or an instantaneous value.

13. A system (3) for managing at least one magnitude representative of the interior comfort (GI) of the building, comprising:
- a programmable element (5) for supplying thermal inputs inside the building, the programmable element (5) comprising an interface able to receive control commands (C) for modifying the supply of heat inputs,
- a terminal (13) according to any of claims 9 to 12, arranged to exchange data with the programmable element (5).

14. A building (1) comprising a management system (3) according to claim 13, the building (1) further comprising at least one sensor (21) for measuring the magnitude representative of the interior comfort (GI) and/or the least one sensor (19) for measuring the magnitude representative of the external weather conditions (GE), said sensors being arranged to transmit data to the terminal (13) via the input interface (17).
